# EUROPEAN PATENT APPLICATION

(11) **EP 2 055 545 A2**
(43) Date of publication of application: **06.05.2009**
(21) Application number: 08167918.5
(22) Date of filing: 30.10.2008
(51) Int. Cl.: B60W 10/06, B60W 10/10, B60W 30/18

(54) **Work Machine and Method**

(30) Priority: 31.10.2007 US 931011
(71) Applicant: Deere & Company, Moline, IL 61265-8098 (US)
(72) Inventor: Janasek, Clayton G., Independence, KS 67301 (US); Eastman, Briton T., Coffeyville, KS 67337 (US)
(74) Representative: Löser, Iris

(57) **Abstract**

A work machine (10) including an internal combustion (IC) engine (12) having an output, and an infinitely variable transmission (IVT) (14) coupled with the IC engine output. The IVT (14) includes an adjustable input/output (I/O) ratio. An operator adjustable torque control input device (40) provides an output signal. At least one electrical processing circuit (28) is coupled with the torque control input device (40) and configured for controlling the IC engine output and/or the IVT I/O ratio, dependent upon the output signal from the torque control input device (40).

## Description

The present invention relates to work machines, and, more particularly, to work machines including an internal combustion engine coupled with an infinitely variable transmission (IVT).

A work machine, such as a construction work machine, an agricultural work machine or a forestry work machine, typically includes a prime mover in the form of an internal combustion (IC) engine. The IC engine may either be in the form of a compression ignition engine (i.e., diesel engine) or a spark ignition engine (i.e., gasoline engine). For most heavy work machines, the prime mover is in the form of a diesel engine having better lugging, pull-down and torque characteristics for associated work operations.

The step load response of an IC engine in transient after a load impact is a feature mostly influenced by the engine displacement, the hardware of the engine (e.g., whether it has a standard turbocharger, a turbocharger with waste gate or variable geometry, etc.), and by the software strategy for driving the air and fuel actuators (e.g., exhaust gas recirculation, turbocharger with variable geometry turbine (VGT), fuel injector configuration, etc.) with respect to the requirements of emissions legislation (e.g., visible smoke, nitrous oxides (NOx), etc.), noise or vibrations. The load impact may be the result of a drivetrain load (e.g., an implement towed behind the work machine) or an external load (e.g., an auxiliary hydraulic load such as a front end loader, backhoe attachment, etc.).

Engine systems as a whole react in a linear manner during the application of a transient load. Initially, the load is applied to the drive shaft of the IC engine. The IC engine speed decreases when the load increases. The engine speed drop is influenced by whether the governor is isochronous or has a speed droop. The air flow is increased to provide additional air to the IC engine by modifying the air actuators. A time delay is necessary to achieve the new air flow set point. The fuel injection quantity, which is nearly immediate, is increased with respect to both the smoke limit and maximum allowable fuel quantity. The engine then recovers to the engine speed set point. The parameters associated with an engine step load response in transient after a load impact are the speed drop and the time to recover to the engine set point.

An IC engine may be coupled with an IVT which provides continuous variable output speed from 0 to maximum in a stepless fashion. An IVT typically includes hydrostatic and mechanical gearing components. The hydrostatic components convert rotating shaft power to hydraulic flow and vice versa. The power flow through an IVT can be through the hydrostatic components only, through the mechanical components only, or through a combination of both depending on the design and output speed.

One example of an IVT for use in a work machine is a hydromechanical transmission which includes a hydraulic module coupled with a planetary gear set. Another example of an IVT for a work machine is a hydrostatic transmission which includes a hydraulic module coupled with a gear set.

A work machine including an IVT may be prone to loss of traction control and wheel slip when the IVT ratio changes to match load conditions. The IVT controller senses engine speed and deepens the IVT ratio as engine speed decreases under load. When at low ground speeds, the amount of power required for the work machine is a low percentage of what the engine can generate, so the engine may not lug down when the output torque from the engine increases. The operator will then not be aware that the torque at the wheels is increasing. In this case, the drive wheels can lose traction and spin out without notice. This is undesirable for certain operations.

What is needed in the art is a work machine configured with an IVT which is not prone to losing traction in low ground speed conditions and a respective method of operating such machine.

It is therefore the object of the present invention to comply with one or all of these needs respectively.

This object is met according to the invention by the teaching of claim 1 or 8 respectively, while features developing the solution in an advantageous manner are set forth in the further claims.

The invention in one form is directed to a work machine including an IC engine having an output, and an IVT coupled with the IC engine output. The IVT may include an adjustable input/output (I/O) ratio. An operator adjustable torque control input device may provide an output signal. At least one electrical processing circuit may be coupled with the torque control input device and be configured for controlling the IC engine output and/or the IVT I/O ratio, dependent upon the output signal from the torque control input device.

The invention in another form is directed to a method of operating a work machine including an IC engine having an output, and an IVT coupled with the IC engine output. The IVT may include an adjustable I/O ratio. The method may include the steps of: setting a torque control setting associated with the IVT using an operator adjustable torque control input device; outputting an output signal from the torque control input device to at least one electrical processing circuit; and controlling the IC engine output and/or the IVT I/O ratio, dependent upon the output signal from the torque control input device.

An embodiment of the invention described below are shown in the drawings, in which
- Fig. 1: is a schematic illustration of an embodiment of a work machine of the present invention; and
- Fig. 2: illustrates a flowchart of an embodiment of the method of operation of a work machine of the present invention.

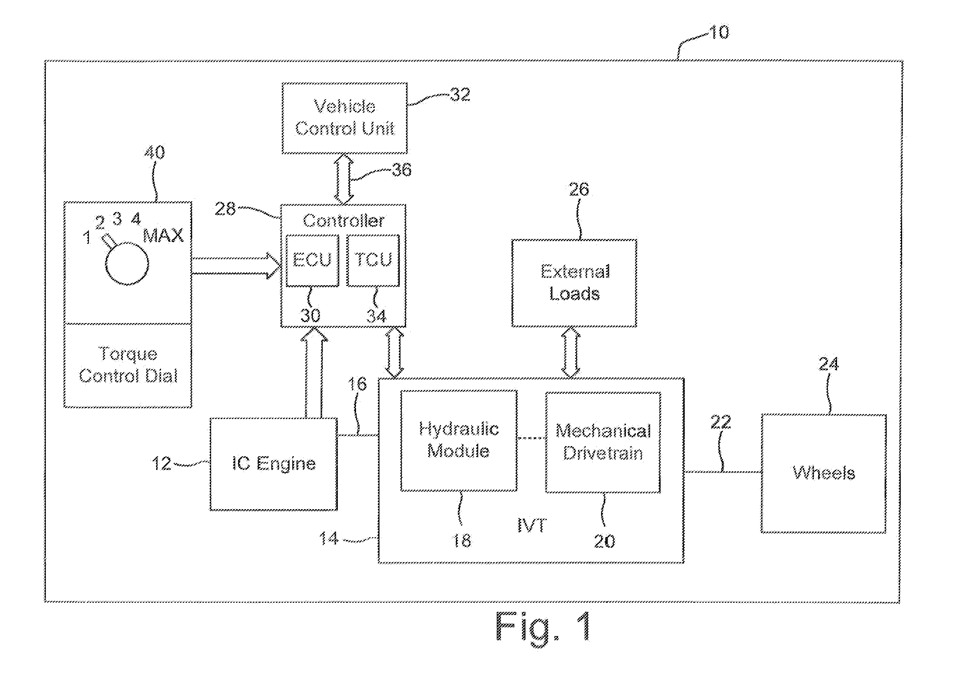

Referring now to Fig. 1, there is shown a schematic illustration of an embodiment of a work machine 10 of the present invention. Work machine 10 could be a road grader, or a construction work machine such as a John Deere front end loader, or a different type of work machine such as an agricultural, forestry, mining, or industrial work machine.

Work machine 10 includes an IC engine 12 which is coupled with an IVT 14, typically through an output crankshaft 16 from IC engine 12. IC engine 12 is assumed to be a diesel engine in the illustrated embodiment, but could also be a gasoline engine, propane engine, etc. IC engine 12 is sized and configured according to the application.

IVT 14 generally includes a hydraulic module 18 and a mechanical drive train module 20. IVT 14 is assumed to be a hydromechanical transmission in the embodiment shown, but could also be a hydrostatic transmission, or other type of IVT. IVT 14 may be of conventional design, and thus is not described in great detail herein. IVT 14 has an output which is coupled with at least one other downstream drive train component 22, which in turn is coupled with a plurality of drive wheels 24, one of which is shown in Fig. 1. Of course, it will be appreciated that in the case of a track-type work vehicle, drive train component 22 may be coupled with a ground engaging track.

IVT 14 also provides output power to one or more external loads 26, which in turn thus provide an additional load on IC engine 12. External loads 26 typically are in the form of hydraulic loads, such as a front end loader, back hoe boom, grain unloading auger, tree felling saw motor, etc. The total load placed upon IC engine 12 thus is a function of both tractive loads and external hydraulic loads.

An electrical processing circuit 28 is configured as one or more controllers. In the embodiment shown, controller 28 includes an engine control unit (ECU) 30 which electronically controls operation of IC engine 12, and is coupled with a plurality of sensors (not specifically shown) associated with operation of IC engine 12. For example, ECU 30 may be coupled with a sensor indicating engine control parameters such as an air flow rate within one or more intake manifolds, engine speed, fueling rate and/or timing, exhaust gas recirculation (EGR) rate, turbocharger blade position, etc. Additionally, ECU 30 may receive output signals from vehicle control unit (VCU) 32 representing vehicle control parameters input by an operator, such as a commanded ground speed (indicated by a position of the throttle and/or hydrostat lever) or a commanded direction of work machine 10 (indicated by an angular orientation of the steering wheel).

Similarly, transmission control unit (TCU) 34 electronically controls operation of IVT 14, and is coupled with a plurality of sensors associated with operation of IVT 14. ECU 30 and TCU 34 are coupled together via a bus structure providing two-way data flow, such as controller area network (CAN) bus 36.

A torque control input device 40 allows an operator to adjust the torque from IVT 14, which is controlled at least in part through controlling the output torque from IC engine 12. In the embodiment shown, torque control input device 40 is configured as a rotatable torque control dial which is positioned within an operator's station. Torque control dial 40 may have visible lines, numbers, serrations, etc. ranging between a minimum torque control setting and a maximum torque control setting. Alternatively, torque control input device 40 could be configured as an electronic touch screen, or any number of other configurations.

One possibility for setting the maximum torque control setting is to match this value with a maximum torque/load value on a torque curve for a given IC engine, and the IVT output at a predefined I/O ratio. In other words, maximum output for IC engine 12 and a predefined output for IVT 14.

For example, for a given IC engine, it is common to use a predefined torque curve with torque (load) as a function of engine speed. The torque curve can be stored in a memory or dynamically determined using a given mathematical function. Such torque curves are well known in the art and thus not shown herein for purposes of brevity. The torque curve used in operation defines the maximum output torque at a given engine speed. Thus, a number of maximum output torques are possible, each corresponding to a different operating speed of IC engine 12. The torque or load is the rotational effort of the crankshaft of the engine, i.e., the output power. The engine speed is typically determined by the position of the throttle, either electronic or mechanical. For the corresponding engine torque, the ECU 30 controls operation of one or more engine control parameters to achieve the desired output torque, which is at or under the maximum torque for that operating speed. For example, the ECU 30 can control an exhaust gas recirculation (EGR) variable in an EGR system (such as a diluent-to-air ratio), a controllable element in a variable geometry turbocharger (VGT), a fuel injection timing, and/or a fuel pressure. It is thus possible to thus set the maximum torque control setting with torque control input device 40 to correspond to a maximum load value on a torque curve at a given operating speed, or a decimal amount of the maximum load value.

The minimum allowable torque control setting is defined as the minimum torque required to overcome the rolling resistance of the work machine vs. machine translational speed. The minimum allowable torque at this lowest control setting is therefore variable and dependent upon the current operating condition. It is therefore possible to vary, via the torque control setting, the desired torque between the minimum allowable setting and the aforementioned maximum setting.

Although the various electronic components such as ECU 30, VCU 32 and TCU 34 are shown coupled together using wired connections, it should also be understood that wireless connections may be used for certain applications. Further, some of the internal electronic and fluid connections within the components of Fig.1 are not shown for simplicity sake.

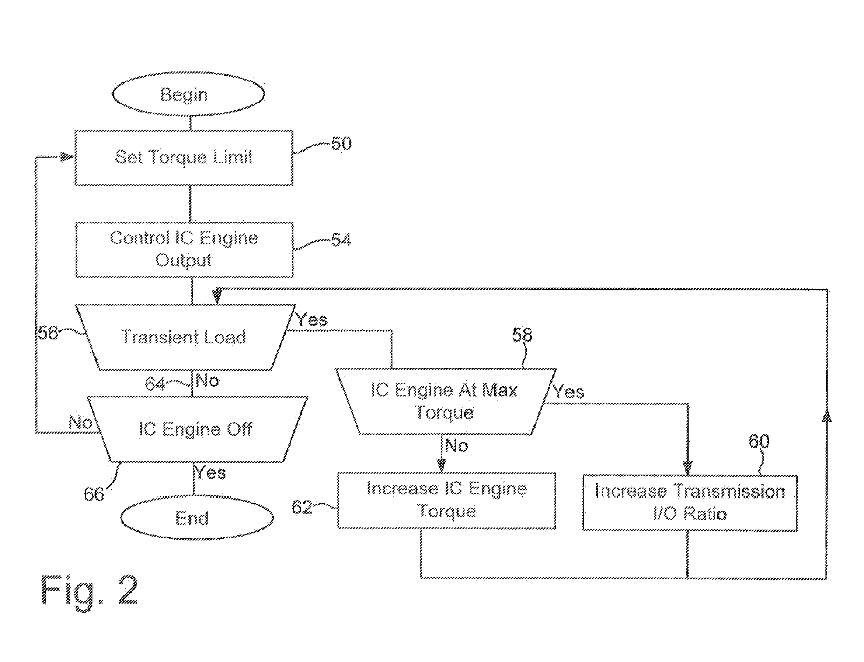

Referring now to Fig. 2, an embodiment of the method of the present invention for operation of work machine 10 will be described in greater detail. The flowchart shown in Fig. 2 accommodates most operating conditions, except where IC engine 12 is operating at or near idle conditions, in which case the output from IC engine 12 is not limited.

The torque limit from the output of IVT 14 is initially set using torque control dial 40 (block 50). The control dial setting corresponds to a desired output torque from IVT 14. Less aggressive settings prevent wheel slip by limiting the I/O ratio increase of IVT 14 in certain ground conditions, and more aggressive settings increase the maximum desired torque. In the case of a hydromechanical transmission, turning the knob to the less aggressive setting actually limits the pressure that is in the hydrostatic unit that is directly connected to the gear train.

During operation, ECU 30 controls the output from IC engine 12, dependent upon the set torque limit (block 54). When the set torque limit is reached, then the fuel rate to IC engine 12 is limited (held constant) to in turn reduce the amount of input torque to IVT 14, thus limiting the output torque from IVT 14. This may cause the engine speed to drop. If the engine speed drops to or below a predetermined low idle RPM value, the IVT I/O ratio is then increased with the goal of maintaining the engine low idle RPM value. If the external load on the machine does not abate, this process may repeat until the machine comes to a stop.

The method of operation of the present invention may also accommodate transient loads during operation (decision block 56). If a transient load such as an external hydraulic load is sensed, then a query is made as to whether the IC engine 12 is at a maximum torque output (decision block 58). If IC engine 12 is already operating at a maximum torque for a given engine speed, then it is not possible to further increase the torque output from IC engine 12, so instead the input/output (I/O) ratio from IVT 14 is increased (block 60). On the other hand, if IC engine 12 is not operating at a maximum torque for a given engine speed, then the torque output from IC engine 12 is increased to match the transient load (block 62).

In the event no transient load is detected, or the transient load passes (line 64), then the method continues until the IC engine 12 is turned OFF (decision block 66). While the IC engine 12 continues to run, control loops back to block 50, where a new or the old torque limit is set.

With the method of the present invention as described above, limiting the input torque from IC engine 12 based on the set torque control limits the maximum output torque from IVT 14, thus controlling tractive effort to meet the operator's demands under current conditions and maximize performance.

Having described the preferred embodiment, it will become apparent that various modifications can be made without departing from the scope of the invention as defined in the accompanying claims.

## Claims

1. A work machine (10), comprising: an internal combustion (IC) engine (12) having an output; an infinitely variable transmission (IVT) (14) coupled with said IC engine output, **characterized in that** said IVT (14) includes an adjustable input/output (I/O) ratio; an operator adjustable torque control input device (40) providing an output signal; and at least one electrical processing circuit (28) coupled with said torque control input device (40) and configured for controlling at least one of said IC engine output and said IVT I/O ratio, dependent upon said output signal from said torque control input device.

2. The work machine according to claim 1, **characterized in that** said torque control input device (40) comprises an operator adjustable torque control dial, wherein preferably said torque control dial includes a minimum torque control setting and a maximum torque control setting, wherein preferably when said torque control dial is at said maximum torque control setting, said at least one electrical processing circuit (28) does not limit said IC engine output and increases said IVT I/O ratio to maintain an engine speed of said IC engine (12) under a transient load, or said maximum torque control setting corresponds to a maximum torque at a given operating speed for said IC engine (12).

3. The work machine according to claim 1 or 2, **characterized in that** said at least one electrical processing circuit (28) includes at least one of an engine control unit (ECU) (30) associated with said IC engine (12), and a transmission control unit (TCU) (34) associated with said IVT (14).

4. The work machine according to claim 3, **characterized by** a speed control lever in communication with and providing an output signal to said TCU (34), said TCU (34) configured for controlling said IVT I/O ratio, dependent upon said output signal from said speed control lever, and preferably including a throttle in communication with and providing an output signal to said ECU (30), said ECU (30) configured for controlling said IC engine output, dependent upon said output signal from said throttle.

5. The work machine according to claim 3 or 4, **characterized in that** said TCU (34) receives said output signal from said torque control input device (40), communicates with said ECU (30), and said ECU (30) controls said IC engine output.

6. The work machine according to one or several of the previous claims, **characterized in that** said at least one electrical processing circuit (28) controls said IC engine output by controlling a fuel rate to said IC engine (12).

7. The work machine according to one or several of the previous claims, **characterized in that** said work machine (10) comprises one of a construction work machine, an agricultural work machine, a forestry work machine, a mining work machine, and an industrial work machine.

8. A method of operating a work machine including an internal combustion (IC) engine (12) having an output, and an infinitely variable transmission (IVT) (14) coupled with the IC engine output, the IVT (14) including an adjustable input/output (I/O) ratio, said method **characterized by** the steps of setting a torque control setting associated with the IVT (14) using an operator adjustable torque control input device (40); outputting an output signal from said torque control input device (40) to at least one electrical processing circuit (28); and controlling at least one of said IC engine output and said IVT I/O ratio, dependent upon said output signal from said torque control input device (40).

9. The method of operating a work machine according to claim 8, said torque control input device (40) comprises an operator adjustable torque control dial, said torque control dial preferably including a minimum torque control setting and a maximum torque control setting, said IVT I/O ratio being limited when said torque control dial is below said maximum torque control setting.

10. The method of operating a work machine according to claim 9, **characterized in that** when said torque control dial is at said maximum torque control setting, said IC engine output is not limited and said IVT I/O ratio is increased to maintain an engine speed of said IC engine (12) under a transient load and/or wherein said maximum torque control setting corresponds to a maximum torque at a given operating speed for said IC engine (12).

11. The method of operating a work machine according to one or several of the claims 8 to 10, **characterized in that** said controlling step is carried out using at least one of an engine control unit (ECU) (30) associated with said IC engine (12), and a transmission control unit (TCU) (34) associated with said IVT (14).

12. The method of operating a work machine according to claim 11, **characterized by** the steps of setting a speed control lever corresponding to a ground speed of said work vehicle (12); outputting an output signal from said speed control lever to said TCU (34); controlling said IVT I/O ratio using said TCU (34), dependent upon said output signal from said speed control lever and preferably including the steps of setting a throttle corresponding to an operating speed of said IC engine (12); outputting an output signal from said throttle to said ECU (30); and controlling said IC engine output using said ECU (30), dependent upon said output signal from said throttle.

13. The method of operating a work machine according to claim 11 or 12, **characterized in that** said TCU (34) receives said output signal from said torque control input device (40), communicates with said ECU (30), and said ECU (30) controls said IC engine output.
